# FASCICULE DE BREVET EUROPEEN

(11) **EP 1 156 698 B1**
(45) Date de publication et mention de la délivrance du brevet: **23.07.2008**
(21) Numéro de dépôt: 01401288.4
(22) Date de dépôt: 17.05.2001
(51) Int. Cl.: H04Q 7/38

(54) **Procédé de signalisation de paramètres de mode compressé à une station mobile**
Verfahren zur Signalisierung von Parametern für komprimierten Modus an eine Mobilstation
Method for signaling of the compressed mode parameters to a mobile station

(30) Priorité: 19.05.2000 FR 0006476
(43) Date de publication de la demande: 21.11.2001
(73) Titulaire: Alcatel Lucent, 75008 Paris (FR)
(72) Inventeur: de Montgolfier, Rémi, 75006 Paris (FR)
(74) Mandataire: El Manouni, Josiane

(56) Documents cités:
- EP-A- 0 892 571
- WO-A-94/29981

## Description

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

La technique CDMA est notamment utilisée dans les systèmes dits de troisième génération, tels que notamment le système UMTS (pour "Universal Mobile Telecommunication System"), offrant des services à des débits supérieurs à ceux déjà offerts par les systèmes dits de deuxième génération, tels que notamment le système GSM (pour « Global System for Mobile communication »).

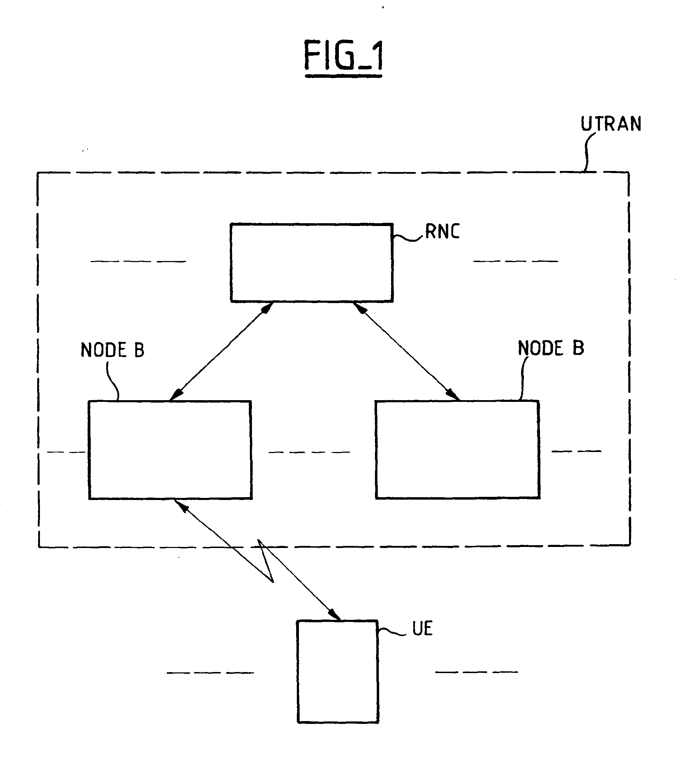

D'une manière générale, un système de radiocommunications mobiles comporte, comme rappelé sur la figure 1, un sous-système d'accès radio comportant lui-même des stations de base (appelées aussi "Node B" dans l'UMTS), et des équipements de contrôle de ces stations de base (appelés aussi RNC, pour "Radio Network Controller" dans l'UMTS). L'ensemble formé par les « Node B » et les RNC est aussi appelé UTRAN, pour "UMTS Terrestrial Radio Access Network". L'UTRAN est en relation d'une part avec des stations mobiles (appelées aussi équipements utilisateur, ou "User Equipment" ou encore UE ), et d'autre part avec un sous-système de réseau et de commutation (non illustré spécifiquement).

D'une manière générale ces systèmes ont une architecture cellulaire, et des techniques de transfert inter-cellulaire (ou "handover" en anglais) sont prévues pour transférer les appels de cellule à cellule au gré des déplacements des utilisateurs. En outre une technique classiquement utilisée est la technique de transfert inter-cellulaire assisté par la station mobile (ou « MAHO », pour "Mobile Assisted Hand-Over" en anglais) selon laquelle une station mobile effectue des mesures radio sur des canaux de contrôle diffusés par des cellules voisines de sa cellule serveuse et reporte les résultats de ces mesures radio au réseau, en vue de faciliter la prise de décision de transfert inter-cellulaire par le réseau.

Une autre technique couramment utilisée dans les systèmes CDMA est la technique dite de transmission en macro-diversité, ou encore "soft handover" (en anglais), selon laquelle une station mobile est connectée simultanément à plusieurs stations de base. Ceci permet, grâce à des techniques appropriées de traitement et de combinaison des différents signaux reçus de ces différentes stations de base par la station mobile (notamment au moyen d'un récepteur de type "Rake") d'améliorer les performances en réception, et aussi de minimiser les risques de perte d'appel lors de transferts inter-cellulaires, contrairement à la technique de "hard handover" selon laquelle une station mobile n'est connectée à chaque instant qu'à une seule station de base.

Lorsqu'au gré des déplacements d'une station mobile, une nouvelle cellule est rajoutée à l'ensemble des cellules (appelé aussi ensemble actif, ou "active set" en anglais) auxquelles cette station mobile est connectée par la technique de "soft handover", la liste des cellules sur lesquelles la station mobile doit effectuer des mesures radio (dites aussi cellules voisines) peut changer. Dans certains cas, la station mobile peut être amenée à effectuer des mesures radio sur une fréquence différente de celle utilisée par ledit ensemble actif pour la communication en cours.

Un exemple de cas où la station mobile peut être amenée à effectuer des mesures radio sur une fréquence différente de celle utilisée pour la communication en cours correspond au cas d'un système tel que l'UMTS incluant deux types de cellules, telles que des cellules dites FDD (pour "Frequency Domain Duplex" en anglais), opérant dans une première bande de fréquences et selon un mode dit W-CDMA (pour « Wideband CDMA » en anglais), et des cellules dites TDD (pour "Time Domain Duplex" en anglais), opérant dans une deuxième bande de fréquences et selon un mode dit TD-CDMA (pour «Time Division-Code Division Multiple Access» en anglais).

Un autre exemple correspond au cas d'un système incluant deux types de cellules, telles que notamment des cellules GSM et des cellules UMTS, correspondant notamment à une introduction progressive de cellules UMTS dans une infrastructure existante correspondant à un système GSM.

Un autre exemple correspond au cas d'un système CDMA dans lequel le nombre de fréquences porteuses allouées à chaque cellule est fonction de la densité de traffic dans cette cellule.

Un autre exemple correspond au cas d'un système CDMA ayant une architecture multi-couche (formée de macro-cellules, micro-cellules ou encore pico-cellules) et dans lequel différentes fréquences porteuses sont allouées aux différentes couches.

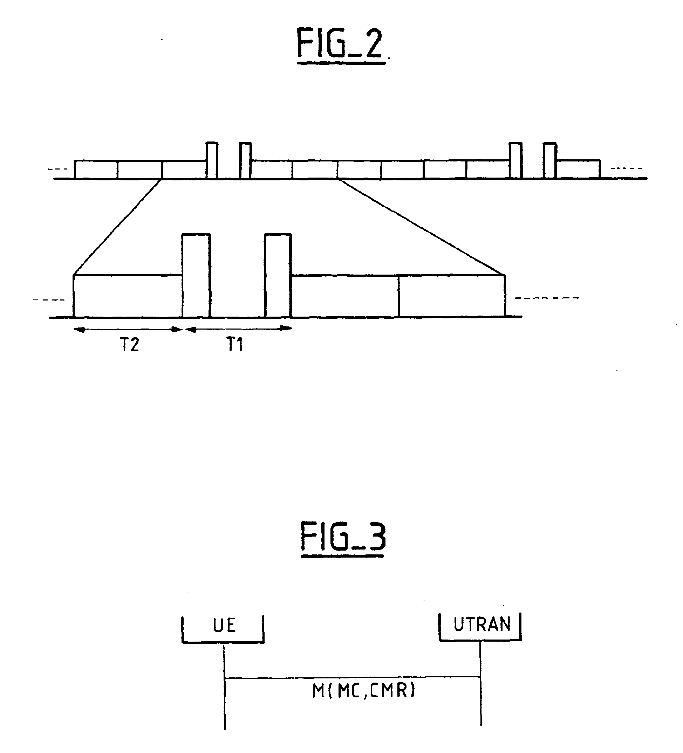

Dans un système CDMA, pour permettre à une station mobile d'effectuer des mesures radio sur une fréquence différente de celle utilisée pour une communication en cours dans un mode dit connecté (c'est-à-dire sur un canal physique dédié), il est connu d'utiliser un mode de transmission dit compressé (ou "compressed mode" en anglais), selon lequel la transmission dans le sens descendant (ou "downlink" en anglais) est interrompue pendant un intervalle de temps donné (appelé aussi "transmission gap" en anglais) pour permettre aux stations mobiles de réaliser lesdites mesures, et le débit est augmenté en dehors dudit intervalle de temps pour compenser ladite interruption de transmission. Ceci est rappelé sur la figure 2 illustrant, dans le cas où les informations transmises sont structurées en trames, une série de trames successives comportant des trames compressées (telles que T1 par exemple) et des trames non compressées (telles que T2 par exemple). Le débit peut être augmenté dans les trames compressées, par exemple en utilisant des codes d'étalement de longueur réduite, ou encore en augmentant le taux de poinçonnage après codage correcteur d'erreurs des informations à transmettre.

Pour plus de souplesse, des paramètres tels que notamment la durée et/ou la fréquence des interruptions de transmission peuvent être rendus variables (en fonction de divers facteurs tels que la configuration du réseau, la vitesse de la station mobile, les conditions de propagation radio, ...etc.). Ces paramètres sont alors avantageusement signalés par le réseau à la station mobile.

Ainsi, pour le système UMTS ("Universal Mobile Telecommunication System") le document 3G TS25. 212 publié par le 3GPP ("3^{rd} Generation Partnership Project") définit les paramètres de mode compressé suivants:
- TGP: (pour "Transmission Gap Period" en anglais), ou période de répétition d'un ensemble de trames consécutives contenant jusqu'à deux interruptions de transmission,
- TGD: (pour "Transmission Gap Distance" en anglais), ou durée de transmission entre deux interruptions de transmission consécutives à l'intérieur d'une période TGP,
- TGL : (pour "Transmission Gap Length" en anglais), ou durée d'interruption de transmission, avec TGL1: durée de la première interruption de transmission à l'intérieur de la période TGP, et TGL2: durée d'interruption de transmission, pour la deuxième interruption de transmission à l'intérieur de la période TGP,
- PD: (pour "Pattern Duration" en anglais, ou durée totale de toutes les périodes TGP.

Le document 3G TS25. 331 V3.2.0 publié par le 3GPP définit par ailleurs les messages de signalisation dans lesquels ces paramètres de mode compressé sont transmis à l'UE. D'une manière générale, ces messages sont des messages transmis à l'UE par l'UTRAN dans le cadre de la réalisation par ce dernier d'une fonction de contrôle de ressources radio (ou RRC, pour "Radio Resource Control" en anglais).

On rappelle que dans un système tel que l'UMTS, plusieurs services peuvent être transportés simultanément sur une même connexion, c'est-à-dire plusieurs canaux de transport peuvent être multiplexés sur un ou plusieurs canaux physiques (ou codes d'étalement) dédiés, alloués pour cette connexion. Les ressources radio ou canaux physiques sont en outre alloués de manière flexible aux différents services, en fonction des services requis, et en fonction de divers facteurs tels que les conditions radio et/ou de trafic rencontrées.

Ainsi, selon le document 3G TS25.331 V3.2.0, les paramètres de mode compressé sont transmis dans les différents messages de signalisation transmis à l'UE par l'UTRAN pour:
- confirmer une demande de connexion, ce qui est le cas des messages appelés dans ce document "RRC Connection Set-up" ou "RRC Connection Re-Establishment",
- établir, re-configurer, ou relâcher (selon le cas) le schéma de multiplexage des canaux de transport sur les canaux physiques, ce qui est le cas des messages appelés dans ce document "Radio Bearer Setup" , "Radio Bearer Reconfiguration", "Radio Bearer Release",
- reconfigurer les canaux de transport et/ou les canaux physiques, ce qui est le cas des messages appelés dans ce document "Transport Channel Reconfiguration", "Physical Channel Reconfiguration".

On peut pour cela notamment se référer, en combinaison, aux points 10.3.6.17, 10.3.6.22, et selon le cas, 10.2.42, 10.2.35, 10.2.29, 10.2.23, 10.2.26, 10.2.51, ou 10.2.18 du document 3G TS25.331 V3.2.0.

Ainsi que l'a observé le demandeur, l'utilisation de tels messages pour la signalisation des paramètres de mode compressé n'est pas judicieuse.

En effet, ces messages ont avant tout une fonction de contrôle de ressources radio, et sont essentiellement transmis par l'UTRAN à l'UE lorsque des changements interviennent dans l'allocation de ressources radio à l'UE. Or ceci ne coïncide pas nécessairement avec les instants où l'UE a besoin de recevoir des paramètres de mode compressé.

Par exemple, lorsqu'une nouvelle cellule est rajoutée à l'ensemble des cellules auxquelles cette station mobile est connectée par la technique de "soft handover", la liste des cellules voisines sur lesquelles la station mobile doit effectuer des mesures radio peut changer, et dans certains cas (correspondant notamment aux exemples donnés précédemment), la station mobile peut être amenée à effectuer des mesures radio sur une fréquence différente de celle utilisée pour la communication en cours. Il peut alors être nécessaire de signaler des paramètres de mode compressé à la station mobile, indépendamment de tout changement dans les ressources radio allouées à cette station mobile.

De même, le réseau peut estimer nécessaire de modifier les paramètres de mode compressé, par exemple en fonction de l'un ou l'autre des facteurs indiqués précédemment, indépendamment de tout changement dans les ressources radio allouées à l'UE.

Bien sûr, ces inconvénients pourraient être évités en prévoyant une retransmission de ces messages de contrôle de ressources radio, lorsque des paramètres de mode compressé sont à transmettre à l'UE, même si cela ne coïncide pas avec une modification des ressources radio allouées à l'UE. Cependant, comme la présence d'informations d'allocation de ressources radio est obligatoire dans chacun de ces messages, ceci oblige inutilement à re-transmettre de telles informations, et donc ne correspond pas à une utilisation efficace des ressources radio disponibles, ou encore augmente inutilement la quantité de trafic dans le réseau et donc le niveau global d'interférence.

A l'inverse, ces inconvénients pourraient être évités en transmettant à l'avance des paramètres de mode compressé à l'UE dans ces messages de contrôle de ressources radio, alors que l'UE ne nécessite à ce moment que des informations de contrôle de ressource radio, mais ceci n'est pas non plus optimal, notamment parce que les paramètres de mode compressé ont encore le temps de changer jusqu'au moment où leur transmission à l'UE devient nécessaire.

En outre, d'une manière générale, dans un système utilisant la technique de transfert inter-cellulaire assisté par la station mobile, le réseau signale aussi à la station mobile des paramètres de contrôle de mesures radio à effectuer sur des cellules voisines.

Pour un système tel que l'UMTS par exemple, le document 3G TS25.331 V3.2.0 prévoit ainsi un message de signalisation particulier, appelé "Measurement Control", pour la transmission de tels paramètres de contrôle de mesures radio par l'UTRAN à l'UE. Ce message "Measurement Control" indique entre autres le type de mesures, notamment:
- intra-fréquence (ou "intra-frequency" en anglais), c'est-à-dire sur une fréquence qui est la même que celle utilisée pour la communication en cours,
- inter-fréquence (ou "inter-frequency" en anglais), c'est-à-dire sur une fréquence qui est différente de celle utilisée pour la communication en cours,
- inter-système (ou "inter-system" en anglais), c'est-à-dire dans un système différent de celui utilisé pour la communication en cours (par exemple le système GSM suivant l'exemple mentionné précédemment) .

En outre, les paramètres de mode compressé peuvent être différents suivant le type de mesures, et inversement, pour un même type de mesures, plusieurs paramètres de mode compressé peuvent être possibles .

Ainsi, actuellement, avec le document 3G TS25.331 V3.2.0, une référence doit être faite, dans les paramètres de mode compressé, au type de mesures auquel ils sont destinés, ce qui introduit un degré de complexité supplémentaire.

Un autre exemple est décrit dans le document WO9429981 (ERICSSON) 22 Décembre 1994.

La présente invention a notamment pour but d'éviter les divers inconvénients précités.

Un objet de la présente invention est un procédé de signalisation de paramètres de mode compressé à une station mobile par un réseau de radiocommunications mobiles, ce procédé étant essentiellement caractérisé en ce que lesdits paramètres de mode compressé sont signalés avec des paramètres de contrôle de mesures radio à effectuer par cette station mobile.

Ainsi, la signalisation de ces paramètres est optimisée et les performances du système sont globalement améliorées.

Avantageusement, lesdits paramètres de mode compressé sont signalés avec des paramètres de contrôle de mesures radio incluant le type de mesures radio à effectuer, notamment intra-fréquence, ou inter-fréquence, ou inter-système.

Ainsi, un lien entre les paramètres de mode compressé et le type de mesures peut être établi de manière beaucoup plus simple et beaucoup plus directe que suivant l'art antérieur rappelé précédemment.

Un autre objet de la présente invention est un équipement de réseau de radiocommunications mobiles, cet équipement de réseau étant essentiellement caractérisé en ce qu'il comporte des moyens pour transmettre des paramètres de mode compressé à une station mobile dans un message de signalisation contenant des paramètres de contrôle de mesures radio à effectuer par cette station mobile.

Avantageusement, ledit message de signalisation contient le type de mesures radio à effectuer par cette station mobile, notamment intra-fréquence, ou inter-fréquence, ou inter-système.

Avantageusement, dans un système tel que le système UMTS, ledit message de signalisation est le message "Measurement Control" prévu pour la transmission de paramètres de contrôle de mesures radio dans ce système.

Un autre objet de la présente invention est une station mobile, cette station mobile étant essentiellement caractérisée en ce qu'elle comporte des moyens pour recevoir des paramètres de mode compressé dans un message de signalisation qui lui est transmis par un réseau de radiocommunications mobiles, contenant des paramètres de contrôle de mesures radio à effectuer par cette station mobile.

Avantageusement, ledit message de signalisation contient le type de mesures radio à effectuer par cette station mobile, notamment intra-fréquence, ou inter-fréquence, ou inter-système.

Avantageusement, dans un système tel que le système UMTS, ledit message de signalisation est le message "Measurement Control" prévu pour la transmission de paramètres de contrôle de mesures radio dans ce système.

D'autres objets et caractéristiques de la présente invention apparaîtront à la lecture de la description suivante d'une exemple de réalisation, faite en relation avec les dessins ci-annexés dans lesquels:
- la figure 1 rappelle l'architecture générale d'un système de radiocommunications mobiles,
- la figure 2 est un schéma destiné à illustrer le principe de la transmission suivant le mode compressé,
- la figure 3 est un schéma destiné à illustrer un procédé suivant l'invention.

Comme illustré sur la figure 3, dans un système tel que notamment le système UMTS, l'invention prévoit que des paramètres de mode compressé sont signalés par le réseau (ou UTRAN) à une station mobile (ou UE) avec des paramètres de contrôle de mesures radio à effectuer par la station mobile. Sur la figure 3, les paramètres de mode compressé sont notés MC, les paramètres de contrôle de mesures radio sont notés CMR, et le message de signalisation correspondant est noté M.

Ainsi, suivant l'invention une station mobile, ou équipement utilisateur, UE, comporte des moyens pour recevoir des paramètres de mode compressé dans un message de signalisation qui lui est transmis par un réseau de radiocommunications mobiles, contenant des paramètres de contrôle de mesures radio à effectuer par cette station mobile.

De même, suivant l'invention, un équipement de réseau de radiocommunications mobiles, tel que RNC et/ou Node B, comporte des moyens pour transmettre des paramètres de mode compressé à une station mobile dans un message de signalisation contenant des paramètres de contrôle de mesures radio à effectuer par cette station mobile.

La réalisation particulière de tels moyens ne présentant pas de difficulté particulière pour l'homme du métier, de tels moyens ne nécessitent pas d'être décrits ici de manière plus détaillée que par leur fonction.

Avantageusement, dans le système UMTS, le message M est le message "Measurement Control" tel que prévu pour la transmission de paramètres de contrôle de mesures radio dans ce système, contenant notamment le type de mesures radio à effectuer par l'UE, notamment intra-fréquence, ou inter-fréquence, ou inter-système.

## Revendications

1. Procédé de signalisation de paramètres de mode compressé à une station mobile par un réseau de radiocommunications mobiles, **caractérisé en ce que** lesdits paramètres de mode compressé sont signalés par ledit réseau à ladite station mobile dans un message de signalisation contenant des paramètres de contrôle de mesures radio à effectuer par cette station mobile.

2. Procédé selon la revendication 1, **caractérisé en ce que** lesdits paramètres de mode compressé sont signalés avec des paramètres de contrôle de mesures radio incluant le type de mesures radio à effectuer, notamment intra-fréquence, ou inter-fréquence, ou inter-système.

3. Procédé selon l'une des revendications 1 ou 2, **caractérisé en ce que** ledit message de signalisation est le message de signalisation, pour système UMTS, Measurement Control.

4. Equipement de réseau de radiocommunications mobiles, **caractérisé en ce qu'**il comporte des moyens pour transmettre des paramètres de mode compressé à une station mobile dans un message de signalisation contenant des paramètres de contrôle de mesures radio à effectuer par cette station mobile.

5. Equipement de réseau selon la revendication 4, **caractérisé en ce que** ledit message de signalisation contient le type de mesures radio à effectuer par la station mobile, notamment infra-fréquence, ou inter-fréquence, ou inter-système,

6. Equipement de réseau selon l'une des revendications 4 ou 5, **caractérisé en ce que** ledit message de signalisation est le message de signalisation, pour système UMTS, Measurement Control.

7. Station mobile, **caractérisée en ce qu'**elle comporte des moyens pour recevoir des paramètres de mode compressé dans un message de signalisation qui lui est transmis par un réseau de radiocommunications mobiles, contenant des paramètres de contrôle de mesures radio à effectuer par cette station mobile.

8. Station mobile selon la revendication 7, **caractérisée en ce** ledit message de signalisation contient le type de mesures radio à effectuer par la station mobile, notamment intra-fréquence, ou inter-fréquence, ou inter-système.

9. Station mobile selon l'une des revendications 7 ou 8, **caractérisée en ce que** ledit message de signalisation est le message de signalisation, pour système UMTS, Measurement Control.

## Claims

1. A method of signaling compressed mode parameters to a mobile station from a mobile radiocommunications network, the method being **characterized in that** said compressed mode parameters are signaled by said network to said mobile station in a signaling message containing control parameters for radio measurements to be performed by said mobile station

2. A method according to claim 1, **characterized in that** said compressed mode parameters are signaled together with radio measurement control parameters including the type of radio measurements to be performed, in particular intra-frequency, inter-frequency, or inter-system type measurements.

3. A method according to claim 1 or claim 2, **characterized in that** said signaling message is the Measurement Control signaling message for the UMTS system.

4. Mobile radiocommunications network equipment, **characterized in that** it includes means for transmitting compressed mode parameters to a mobile station in a signaling message containing control parameters for radio measurements to be performed by the mobile station.

5. Network equipment according to claim 4, **characterized in that** said signaling message contains the type of radio measurements to be performed by the mobile station, in particular intra-frequency, inter-frequency, or inter-system type measurements.

6. Network equipment according to claim 4 or claim 5, **characterized in that** said signaling message is the Measurement Control signaling message for the UMTS system.

7. A mobile station **characterized in that** it includes means for receding compressed mode parameters in a signaling message which is transmitted thereto by a mobile radiocommunications network, the message containing control parameters for radio measurements to be performed by the mobile station.

8. A mobile station according to claim 7, **characterized in that** said signaling message contains the type of radio measurements to be performed by the mobile station, in particular intra-frequency, inter-frequency, or inter-system type measurements.

9. A mobile station according to claim 7 or claim 8, **characterized in that** said signaling message is the Measurement Control signaling message for the UNITS system.

## Patentansprüche

1. Verfahren zur Signalisierung von Parametern für komprimierten Modus an eine Mobilstation über ein Mobilfunkkommunikationsnetz, **dadurch gekennzeichnet, dass** die besagten Parameter für komprimierten Modus von dem besagten Netz an die besagte Mobilstation in einer Signalisierungsnachricht, welche die Parameter für die Steuerung der Funkmessungen enthält, signalisiert werden.

2. Verfahren nach Anspruch 1, **dadurch gekennzeichnet, dass** die besagten Parameter für komprimierten Modus mit den Parametern für die Steuerung der Funkmessungen, welche die Art der auszuführenden Funkmessungen, insbesondere Intrafrequenz-, Interfrequenz- oder Intersystem-Messungen enthalten, signalisiert werden.

3. Verfahren nach einem der Anspruche 1 oder 2, **dadurch gekennzeichnet, dass** die besagte Signalsierungsnachricht für das UMTS-System die Measurement Control-Signalisierungsnachricht ist.

4. Mobilfunkkommunikationsnetzausstattung, **dadurch gekennzeichnet, dass** sie Mittel zur Übertragung der Parameter für komprimierten Modus an eine Mobilstation in einer Signalisierungsnachricht, weiche die Parameter für die Steuerung der von der Mobilstation auszuführenden Funkmessungen enthält, umfasst.

5. Netzausstattung nach Anspruch 4, **dadurch gekennzeichnet, dass** die besagte Signalisierungsnachricht die Art der von der Mobilstation auszuführenden Funkmessungen, insbesondere Intrafrequenz-, Interfrequenz- oder Intersystem-Messungen, enthält.

6. Netzausstattung nach einem der Ansprüche 4 oder 5, **dadurch gekennzeichnet, dass** die besagte Signalisieiungsnachricht für das UMTS-System die Measurement Control-Signalisierungsnachricht ist.

7. Mobilstation, **dadurch gekennzeichnet, dass** sie Mittel zum Empfangen der Parameter für komprimierten Modus in einer Signalisierungsnachricht, welche ihr von einem Mobilfunkkommunikationsnetz übertragen werden und die Parameter für die Steuerung der von dieser Mobilstation, aufzuführenden Funkmessungen enthält, umfasst.

8. Mobilstation nach Anspruch 7, **dadurch gekennzeichnet, dass** die besagte Signalisierungsnachricht die Art der von der Mobilisation auszuführenden Funkmessungen, insbesondere Intrafrequenz-, Interfrequenz- oder Intersystem-Messungen, enthält.

9. Mobilstation nach einem der Ansprüche 7 oder 8, **dadurch gekennzeichnet, dass** die besagte Signalisierungsnachricht für das UMTS-System die Measurement Control-Signalisierungsnachricht ist.
